Europäisches Patentamt

European Patent Office

Office européen des brevets

(19)

(11) Veröffentlichungsnummer: **0 011 674**
**B1**

(12) **EUROPÄISCHE PATENTSCHRIFT**

(45) Veröffentlichungstag der Patentschrift: **13.10.82**

(21) Anmeldenummer: **79102468.0**

(22) Anmeldetag: **16.07.79**

(51) Int. Cl.³: **H 04 N 5/14**

(54) **Verfahren zur Erzeugung eines Vertikalapertursignals für eine Farbfernsehkamera.**

(30) Priorität: **02.12.78 DE 2852247**

(43) Veröffentlichungstag der Anmeldung:
**11.06.80 Patentblatt 80/12**

(45) Bekanntmachung des Hinweises auf die Patenterteilung:
**13.10.82 Patentblatt 82/41**

(84) Benannte Vertragsstaaten:
**AT CH DE GB IT SE**

(56) Entgegenhaltungen:
**GB - A - 1 199 801**
**US - A - 3 681 520**
**US - A - 3 732 360**
**US - E - 29 570**

(73) Patentinhaber: **GRUNDIG E.M.V. Elektro-Mechanische Versuchsanstalt Max Grundig**
**Kurgartenstrasse 37**
**D-8510 Fürth (DE)**

(72) Erfinder: **Rumland, Rainer, Ing. grad.**
**Irmgardstrasse 12**
**D-8501 Rosstal (DE)**

(74) Vertreter: **Voigt, Günter**
**Kurgartenstrasse 37**
**D-8510 Fürth (DE)**

Courier Press, Leamington Spa, England.

Verfahren zur Erzeugung eines Vertikalapertursignals für eine Farbfernsehkamera

Die Erfindung bezieht sich auf ein Verfahren zur Erzeugung eines Vertikalapertursignals für eine Farbfernsehkamera gemäß dem Oberbegriff des Anspruchs 1.

Vertikaperturschaltungen sind seit mehreren Jahren bekannt. Darartige Schaltungen dienen dazu, durch die Vertikalapertur die Kanten eines Fernsehbildes in vertikaler Richtung an beliebigen Übergängen des Fernsehbildes zu betonen. Hierzu wird ein Videosignal, Signal A1 (unverzögert), vorzugsweise das Luminanzsignal Y mit einem Verzögerungsglied für die Dauer einer Zeile, Signal A2 (einmal verzögert), und dann für die Dauer einer weiteren Zeile, Signal A3 (zweimal verzögert), verzögert. Durch geeignete Summen- und Differenzbildung kann ein Korrektursignal mit den gewünschten Eigenschaften erzeugt werden, welches zum einmal verzögerten Signal A2 addiert wird. Der Vorgang kann durch folgenden Ausdruck dargestellt werden:

$$A4 = A2 + [A2 - 1/2(A1 + A3)],$$

wobei A4 das bereits korrigierte Videosignal ist. Die Hauptkomponente des weiter zu verarbeitenden Signals A4 ist das einmal verzögerte Signal A2. Dieses Signal muß mit voller Bandbreite vorhanden sein, d.h. das Verzögerungsglied, welches das Signal A2 aus dem Signal A1 erzeugt, muß ausreichend breitbandig sein. Da mit einer Bandbreite des Videosignals von ≥4 MHz gerechnet werden muß, müssen zur Verzögerung dieses Signals sehr teuere Verzögerungsglieder verwendet werden.

Als Verzögerungsglieder dienen vorzugsweise Glasverzögerungsleitungen. Da derartige Leitungen jedoch keine tieffrequenten Signale übertragen können, muß das Signal geträgert übertragen werden. In der Hochfrequenztechnik ist es üblich, mit Trägerfrequenzen von 15 bis 30 MHz zu arbeiten, um das Videoband mit einer Bandbreite von 7 MHz übertragen zu können.

In den letzten Jahren wurden für diese Übertragungstechnik neben den Glasverzögerungsleitungen auch integrierte Schaltungen in der Art eines analogen oder digitalen Schiebespeichers bekannt, die jedoch bisher zu keiner preiswürdigen Lösung geführt haben.

Einschlägige Erläuterungen zur Vertikalapertur bzw. zu Vertikalaperturschaltungen sind in dem Buch "Einführung in die Fernsehtechnik" von Dillenburger, Band 2, S. 321 beschrieben.

Aus der US—E—RE 29 570 ist bereits ein Verfahren gemäß Oberbegriff des Anspruchs 1 bekannt, bei dem das Farbkanalsignal Grün zur Erzeugung eines Korrektursignals verwendet wird. Offenbar wird deshalb das grüne Farbkanalsignal zur Erzeugung des Korrektursignals verwendet, weil das Farbkanalsignal Grün den größten Energieinhalt aufweist. In Spalte 4, Zeilen 53 bis 59 dieser Druckschrift wird jedenfalls darauf hingewiesen, daß bei Verwendung der Farbkanalsignale Rot und Blau zwar ein ähnlicher Effekt erzielt werden kann, jedoch nicht mit der gleichen Effizienz.

Aus der GB—A 11 99 801 ist eine 4-Röhren-Kamera bekannt, bei der drei Röhren für die einzelnen Farbsignale und eine Röhre für das Luminanzsignal vorhanden ist. Selbstverständlich kann hier das Grün-Signal durch die billigen Laufzeitleitungen in der Bandbreite begrenzt werden, da ja die Grün-Information nur zur Bildung der Farbdifferenzsignale benötigt wird. Diese werden ebenfalls nur relativ schmalbandig mit einer Bandbreite von ca. 1 MHz benötigt. Das Luminanzsignal und damit die Schärfeinformation wird bei dieser bekannten Kamera aus der Luminanzröhre bezogen.

Der Erfindung liegt die Aufgabe zugrunde, ein Verfahren zur Erzeugung eines Vertikalapertursignals für eine Farbfernsehkamera zu schaffen, welches gegenüber konventionellen Verfahren eine erhebliche Kostenersparnis bringt und mit einfacheren Mitteln den annähernd gleichen Erfolg wie die bekannten Verfahren liefert.

Diese Aufgabe wird erfindungsgemäß durch die im kennzeichnenden Teil des Anspruchs 1 angegebenen Merkmale gelöst.

Der Erfindung liegt die Erkenntnis zugrunde, daß es ganz entscheidend auf den Störabstand ankommt. Insoweit bietet sich zunächst das energiereichere Grün-Signal als Ausgangsbasis an. Es wurde jedoch festgestellt, daß das energieärmere, jedoch gleichzeitig schmalbandiger zu gestaltende Blau-Signal entgegen den Darlegungen im Stand der Technik ebenso gut geeignet ist, da der Störabstand wegen der Schmalbandigkeit des Blau-Signals trotz der geringen Energiedichte hinreichend groß bleibt. Daraus ergibt sich dann der nicht unerhebliche Vorteil, daß schmalbandige Verzögerungsleitungen zur Erzielung der Zweizeilenverzögerung verwendet werden können. Die Kosten für die Verzögerungsleitungen sinken damit um mehr als eine Größenordnung.

Vorteilhafte Weiterbildungen des erfindungsgemäßen Verfahrens ergeben sich aus den Unteransprüchen.

Das erfindungsgemäße Verfahren läßt sich vorteilhaft in Schaltungen für Farbfernsehkameras oder Farbcoder verwenden.

Das Verfahren wird nachfolgend beispielsweise erläutert.

Durch die Verwendung von relativ schmalbandigen Glasverzögerungsleitungen in PAL-Fernsehempfängern, stehen diese Leitungen sehr preiswert auf dem Bauelemente-Markt zur Verfügung. Diese Glasverzögerungsleitungen sind jedoch durch ihre Schmalbandigkeit nur für eine Übertragung einer Basisbandbreite von ca.

1 MHz geeignet, wobei die Trägerfrequenz vorzugsweise bei 4,4 MHz liegt.

Das erfindungsgemäße Verfahren läßt gegenüber konventionellen Lösungen eine schmalbandige Verzögerung des Videosignals zur Erzeugung des Vertikalkorrektursignals zu, wobei den hohen Anforderungen der breitbandigen Verzögerungen begegnet werden kann.

Das Luminanzsignal Y einer Farbfernsehkamera setzt sich bekanntlich aus den Anteilen Y=0,3 R+0,59 G+0,11 B zusammen. Da das breitbandige Luminanzsignal neben den Helligkeitswerten auch die Schärfeinformation enthält, ist dieses Signal zur Erzeugung des gewünschten Korrektursignals in Verbindung mit den schmalbandigen Glasverzögerungsleitungen ungeeignet. Betrachtet man jedoch die Einzelkomponenten des Luminanzsignals Y, so stellt man fest, daß das Signal für den Farbkanal Grün mit 59% am Luminanzsignal und damit am Schärfesignal beteiligt ist. Das Signal für den Farbkanal Rot ist nur mit 30% und das Signal für den Farbkanal Blau nur mit 11% beteiligt. Wird nun das Signal für den Farbkanal Blau nur mit der möglichen Bandbreite von 1 MHz übertragen, so beträgt der Schärfeverlust im hochfrequenten Anteil (1 bis 5 MHz) des Luminanzsignals Y nur 11%.

Dieser Schärfeverlust kann durch einfache Aperturschaltungen für die Horizontalrichtung wirkungsvoll ausgeglichen werden. Die Helligkeitsinformation mit 1 MHz Bandbreite reicht ebenfalls zur farbgetreuen Darstellung völlig aus, so daß sich kaum ein nennenswerter Fehler ergibt. Untersuchungen bezüglich der zulässigen Schmalbandigkeit des erzeugten vertikalen Korrektursignals zur Erzielung einer ausreichend guten Vertikalapertur haben ergeben, daß die Bandbreite von 1 MHz ausreichend ist. Beide genannten Maßnahmen zusammen ergeben ein gutes Korrektursignal, welches wie üblich zum Luminanzsignal Y addiert werden kann. Aufgrund dieser Anordnung ergibt sich in der Praxis eine Kostenersparnis von z. Zt. dem ca. 8 bis 12 fachen herkömmlicher Anordnungen bzw. Verfahren.

## Patentansprüche

1. Verfahren zur Erzeugung eines Vertikalapertursignals für eine Farbfernsehkamera mit mehreren, vorzugsweise drei Farbröhren, mit Gewinnung des Luminanzsignals aus den Farbsignalen ohne Verwendung einer getrennten Luminanzröhre, wobei aus einem Farbkanalsignal ein Korrektursignal gewonnen wird, das das abgegebene Videosignal derart beeinflußt, daß eine deutliche Betonung der horizontalen Kanten im wiedergegebenen Fernsehbild auftritt, wobei zur Gewinnung des Korrektursignals eine Zweizeilen-Verzögerungsschaltung mit entsprechender Verknüpfung des verzögerten und unverzögerten Signals verwendet wird und wobei das Korrektursignal dem Luminanzsignal oder einem anderen Farbkanalsignal hinzugefügt wird, dadurch gekennzeichnet, daß zur Gewinnung des Korrektursignals ein Farbkanalsignal herangezogen wird, welches am Luminanzsignal geringanteilig beteiligt ist, daß das zur Korrektur benutzte Farbkanalsignal schmalbandig zum Korrektursignal aufbereitet wird und daß das zwangsweise um eine Zeile verzögerte geringanteilige Farbkanalsignal in seiner schmalbandigen Form zur Beeinflussung des Luminanzsignals herangezogen wird.

2. Verfahren nach Anspruch 1, dadurch gekennzeichnet, daß als geringanteilig am Luminanzsignal beteiligtes Farbkanalsignal das in der Fernsehkamera gewonnene Signal für den Kanal Blau verwendet wird.

## Claims

1. A method of generating a vertical aperture signal for a colour television camera having a plurality of colour tubes, preferably three, comprising deriving the luminence signal from the colour signals without using a separate luminence tube, wherein a correction signal is derived from a colour channel signal and influences the produced video signal in such a manner that a clear emphasis of the horizontal edges occurs in the reproduced television picture, wherein a two-line delay circuit with corresponding gating of the delayed and undelayed signal is used for deriving the correction signal and wherein the correction signal is added to the luminence signal or to another colour channel signal, characterised in that, for deriving the correction signal, a colour signal is used which contributes a low proportion to the luminence signal, that the colour channel signal used for the correction is made of narrow band width with respect to the correction signal and that the proportionately low colour channel signal, necessarily delayed by one line, is used in its narrow band width form for influencing the luminence signal.

2. A method according to claim 1, characterised in that, the signal for the blue channel extracted in the television camera, is used as the colour channel signal contributing a low proportion to the luminence signal.

## Revendications

1. Procédé pour engendrer un signal d'ouverture verticale pour une caméra de télévision en couleurs comprenant plusieurs tubes-couleurs de préférence au nombre de trois, et dans lequel on produit un signal de luminance à partir des signaux de chrominance sans utiliser un tube de luminance distinct, procédé au cours duquel on engendre à partir d'un signal de chrominance un signal de correction qui agit sur le signal video engendré de telle façon que les bords horizontaux de l'image de télévision reproduite soient clairement accentés et dans lequel, pour engendrer le signal de correction on utilise un montage à retard sur deux lignes avec combinaison correspondante des signaux retardés et non retardés, le signal de correction étant ajouté au signal de luminance ou un autre signal de chrominance, ce procédé étant caractérisé en ce que, pour engendrer le signal de correction, on emploie un signal de chrominance qui ne constitue qu'une faible part de luminance, en ce que le signal de chrominance utilisé pour la correction est établi avec une bande étroite pour le signal de correction et en ce que le signal de chrominance qui ne constitue qu'une faible part du signal de luminance et qui est obligatoirement retardé d'une ligne, est utilisé sous sa forme à bande étroite pour influencer le signal de luminance.

2. Procédé suivant la revendication 1, caractérisé en ce qu'en tant que signal de chrominance qui ne constitue qu'une faible part du signal de luminance, on utilise le signal du canal bleu engendré dans la caméra de télévision en couleurs.